# EUROPÄISCHE PATENTSCHRIFT

(11) **EP 0 372 464 B1**
(45) Veröffentlichungstag und Bekanntmachung des Hinweises auf die Patenterteilung: **22.03.1995**
(21) Anmeldenummer: 89122368.7
(22) Anmeldetag: 05.12.1989
(51) Int. Cl.: B23Q 11/00

(54) **Auf manuelle Bedienung umschaltbare CNC-Drehmaschine**
CNC lathe also suited for manual operation
Tour-CNC à conduite manuelle changeable

(30) Priorität: 05.12.1988 DE 3840944; 05.12.1988 DE 8816401 U
(43) Veröffentlichungstag der Anmeldung: 13.06.1990
(73) Patentinhaber: Pfeifer, Lisette, 74223 Flein (DE)
(72) Erfinder: Pfeifer, Hugo, (CH)
(74) Vertreter: Alber, Norbert

(56) Entgegenhaltungen:
- DE-A- 2 055 866
- DE-A- 2 619 910
- DE-A- 3 018 520
- DE-A- 3 031 075
- DE-B- 1 296 989
- DE-C- 3 938 851
- US-A- 3 221 578
- US-A- 4 084 461

## Beschreibung

Die Erfindung betrifft eine CNC-Drehmaschine mit motorisch mit einstellbarer Drehzahl angetriebener Arbeitsspindel und Antriebselementen zum Bewegen der die Drehwerkzeuge tragenden Schlitten und Supporte und einer CNC-Steuerung.

CNC-Drehmaschinen sind in unterschiedlichsten Ausführungsformen bekanntgeworden. Sie sind mit einer CNC-Steuereinrichtung ausgerüstet, in die man die Werte für die in Betracht kommenden Koordinaten hinsichtlich des Bewegungsablaufs der einzelnen Maschinenelemente eingibt, woraufhin die einzelnen Arbeitsgänge in der vorgegebenen Reihenfolge nacheinander automatisch ausgeführt werden.

So wird z.B. in der DE-A-2 619 910 eine Revolverdrehbank mit automatischer numerischer Steuerung und einer horizontal gelagerten Arbeitsspindel beschrieben, die zwei quer zueinander verfahrbare Schlitten, nämlich einen Planschlitten und einen Werkzeugschlitten aufweist, wobei der Planschlitten auf dem Werkzeugschlitten angeordnet ist. Die Bewegung der Schlitten erfolgt jeweils mit Hilfe eines Spindelantriebes, bei dem die Spindeln von Antriebsmotoren gedreht werden und die Spindelmuttern jeweils drehfest an dem betreffenden Schlitten angebracht sind.

Drehmaschinen, die manuell bedient werden, gibt es gleichfalls in unterschiedlichsten Ausführungsformen. Im Laufe der Zeit sind diese Maschinen immer weiter entwickelt und verbessert worden, um die manuelle Bedienung weitgehend zu erleichtern und zu vereinfachen. Drehmaschinen dieses Typs sind zumeist Universaldrehbänke, die mit einer Zug- und einer Leitspindel ausgerüstet sind und die es ermöglichen, Dreharbeiten jedweder Art von Hand auszuführen.

Überdies sind Drehautomaten bekanntgeworden, bei welchen im wesentlichen der Arbeitsablauf automatisch erfolgt, die Steuerung der Maschine im wesentlichen jedoch auf mechanischem Wege vorgenommen wird.

Bei den manuell bedienbaren Drehmaschinen sind die zu bewegenden Elemente über eine Vielzahl von in gewünschter Weise einstellbaren mechanischen Getrieben und Trieben mit dem Hauptantriebsmotor gekuppelt.

Bei den CNC-Drehmaschinen dagegen werden die Bewegungen der Elemente durch elektrisch bzw. elektronisch steuerbare Motore bewirkt, weshalb die außerordentlich aufwendige Verkupplung der Elemente mit dem Hauptantriebsmotor entfällt. Hieraus ergibt sich, daß CNC-Drehmaschinen normalerweise keine Möglichkeit bieten, Dreharbeiten in herkömmlicher Weise von Hand auszuführen.

In zahlreichen, insbesondere kleineren Betrieben werden sowohl CNC- als auch manuell bedienbare Drehmaschinen benötigt, wobei diese Maschinen teilweise während mehr oder weniger langer Zeitspannen ungenutzt bleiben. Da aber heutzutage beide Typen von Maschinen benötigt werden, kommen die erwähnten Betriebe nicht umhin, Drehmaschinen beider Typen stets einsetzbar zur Verfügung zu haben, um die anfallenden Arbeiten rasch und kostengünstig ausführen zu können.

Der Erfindung liegt die Aufgabe zugrunde, eine CNC-Maschine allgemein üblicher Bauart in der Weise auszubilden, daß sie nicht nur ausschließlich mittels der CNC-Steuereinrichtung bedienbar ist, sondern im Bedarfsfall auch manuell bedient werden kann, um einzelne, spezielle Dreharbeiten rasch ausführen zu können. Dadurch soll erreicht werden, daß in kleineren Betrieben manuell bedienbare Drehmaschinen in weit geringerem Umfang benötigt, gewartet und unterhalten werden müssen als bisher, weil die erfindungsgemäß ausgebildeten Drehmaschinen alle diejenigen Arbeiten durchzuführen erlauben, die ansonst nur mit Hilfe einer ausschließlich manuell bedienbaren Drehmaschine ausgeführt werden können. Die Folge ist ein geringerer Kapitaleinsatz für den Maschinenpark, weil eine oder mehrere, manuell bedienbare Drehmaschinen eingespart werden können. Die in Betracht kommenden Arbeiten lassen sich dann auf der erfindungsgemäß ausgebildeten Kombinationsdrehmaschine durchführen. Zwar ist eine solche Drehmaschine etwas teurer, jedoch sind die Stillstandszeiten solcher Maschinen nicht unwesentlich geringer als die von Einzelmaschinen der beiden Typen.

Zur Lösung der der Erfindung zugrundeliegenden Aufgabe wird daher vorgeschlagen, die in Betracht kommende kombinierte Drehmaschine in der Weise auszubilden, daß sie die Merkmale aufweist, die im Patentanspruch 1 angegeben sind. Weitere zweckmäßige Ausbildungen einer solchen Drehmaschine weisen in den Unteransprüchen angegebene Merkmale auf.

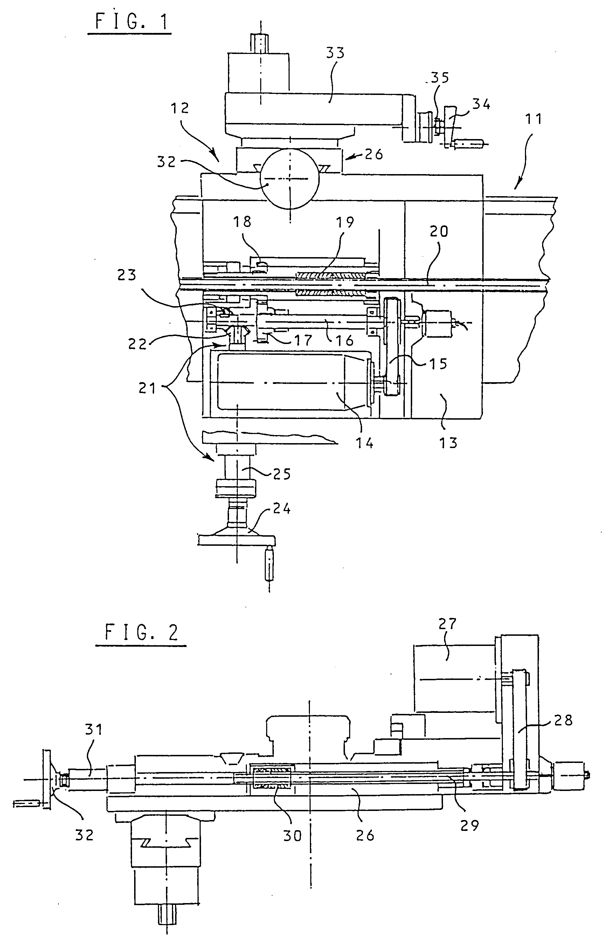

In den Figuren 1 und 2 der Zeichnung ist der Gegenstand der Erfindung anhand eines Ausführungsbeispiels schematisch dargestellt.
- Fig. 1: zeigt eine Seitenansicht des Werkzeugschlittens einer nicht näher dargestellten CNC-Kombinations-Drehmaschine mit geöffneter Schloßplatte;
- Fig. 2: zeigt den Aufbau des Planschlittens des Werkzeugschlittens nach Fig. 1.

Der Aufbau der erfindungsgemäß ausgebildeten Drehmaschine entspricht demjenigen, der bei CNC-Drehmaschinen üblich ist. Auf dem Gestell 11 ist der Werkzeugschlitten 12 längs Prismenschienen in Richtung der Z-Achse verschieblich gelagert. An dem Werkzeugschlitten 12 sitzt die Schloßplatte 13, an der ein regelbarer, den Vorschub des Werkzeugschlittens 12 besorgender Antriebsmotor 14 befestigt ist, der über den Riementrieb 15 die Zwischenwelle 16 antreibt, auf welcher ein Zahnrad 17 sitzt, das in eine Verzahnung 18 der Hülse eingreift, die die auf einer Leitspindel 20 sitzende Schloßmutter 19 trägt. Bei Drehung der auf der Leitspindel 20 sitzenden Schloßmutter 19 wird bei feststehender Leitspindel 20 der Werkzeugschlitten 12 längs der Z-Achse der Drehmaschine verschoben.

Um die erfindungsgemäß ausgebildete Kombinations-Drehmaschine manuell bedienen und Dreharbeiten von Hand ausführen zu können, ist eine Antriebswelle 21 vorgesehen (die in der Zeichnung um 90° nach unten verschwenkt dargestellt ist), an deren Ende in der Schloßplatte 13 ein Kegelrad 22 sitzt, das mit einem Kegelrad 23 auf der Zwischenwelle 16 in Eingriff steht. Das Handrad 24 ist mit Hilfe der Elekromagnet-Zahnkupplung 25 mit der Welle 21 verbindbar. Mittels eines Wählschaltes wird einerseis der Elektromotor 14 abgeschaltet und andererseits gleichzeitig der Elekromagnet der Kupplung 25 erregt und damit das Handrad 24 an die Welle 21 angekuppelt, so daß dieses dann über den Kegeltrieb 22, 23 mit der auf der Leitspindel 20 sitzenden Schloßmutter 19 verbunden ist. Damit ist es moglich, die Zwischenwelle 16 bei abgeschaltetem Antriebsmotor 14 von Hand zu drehen, wodurch sich dann der Werkzeugschlitten 12 durch Drehen des Handrades 24 in der einen oder entgegengesetzten Richtung verschieben läßt.

Wie aus der den Aufbau des Planschlittens 26 schematisch darstellenden Fig. 2 hervorgeht, sitzt auf dem Planschlitten 26 der regelbare Antriebsmotor 27, der über einen Riementrieb 28 die Planschlittenspindel 29 dreht, auf der die am Planschlitten 26 fest gelagerte Spindelmutter 30 sitzt, so daß durch Drehung der Spindel 29 der Planschlitten 26 rechtwinklig zur Z-Achse entlang der X-Achse vor- und zurückbewegbar ist.

Zum Zwecke des Bewegens des Planschlittens 26 von Hand ist mittels einer Elektromagnet-Zahnkupplung 31 ein Handrad 32 mit der Spindel 29 verbindbar. Durch Betätigen des Betriebsarten-Wählschalters erfolgt auch hier automatisch ein Abschalten des Antriebsmotors 27 und ein Ankuppeln des Handrades 32 an die Spindel 29, so daß dann durch Drehung des Handrades 32 die Spindel 29 gedreht und mittels der Spindemutter 30 der Planschlitten von Hand vor- und zurückbewegbar ist.

Der Planschlitten 26 trägt weiterhin einen vorzugsweise schwenkbaren Werkzeugschlitten 33, der mittels einer mit einem Handrad oder einer Kurbel 34 drehbaren Spindel 35 bewegbar ist, um auch mit diesem Dreharbeiten von Hand ausführen zu können. Dieser Werkzeugschlitten 33 ist vorteilhafterweise abnehmbar, um ihn gegebenenfalls gegen andere Werkzeuge oder Aggregate auswechseln zu können.

Vorteilhafterweise ist die Drehmaschine mit einer Indexierungseinrichtung ausgerüstet, die dafür sorgt, daß einerseits alle eingegebenen Daten erhalten bleiben und andererseits nach der Ausführung von Dreharbeiten von Hand alle beweglichen Elemente automatisch beim Zurückschalten auf CNC-Betrieb in ihre "Null"- bzw. Ausgangslage zurückbewegt werden. Dies gilt auch für den schwenkbaren Werkzeugschlitten 33.

Die erfindungsgemäß ausgebildete, zuvor hinsichtlich der vorliegend wesentlichen Elemente beschriebene Drehmaschine ermöglicht es, unter Einsatz der CNC-Steuereinrichtung in der üblichen Weise große Serien einander identischer Artikel durch spanabhebende Bearbeitung herzustellen und für den Fall, daß Einzelteile oder kleine Serien von Artikeln herzustellen sind, die notwendigen Dreharbeiten von Hand auszuführen. Letzteres kann jeweils dann in wirtschaftlicher Weise geschehen, wenn die CNC-Drehmaschine während bestimmter Zeiten nicht benutzt wird. Somit können insbesondere in Kleinbetrieben von Hand bedienbare Drehmaschinen, zumindest zu einem beachtlichen Teil, durch die erfindungsgemäß ausgebildeten Maschinen ersetzt werden, was einen geringeren Investitionsaufwand zur Folge hat.

## Patentansprüche

1. CNC-Drehmaschine
- mit motorisch mit einstellbarer Drehzahl angetriebener Arbeitsspindel,
- Antriebselementen zum Bewegen der die Drehwerkzeuge tragenden Schlitten und Supporte,
- einer CNC-Steuereinrichtung,
- einem ersten drehzahlregelbaren und abschaltbaren Antriebsmotor (14), der mittels eines ersten Getriebes (15,16,17,18) den Vorschub eines Werkzeugschlittens (12) besorgt, und
- einem auf einem Planschlitten (26) angeordneten zweiten drehzahlregelbaren und abschaltbaren Antriebsmotor (27), welcher über ein zweites Getriebe (28) mit einer am Werkzeugschlitten (12) in Langsrichtung des Planschlittens (26) gelagerten Gewindespinael (29), aus welcher eine am Planschlitten (26) drehfest angeordnete Spindelmutter (30) sitzt, verbunden ist,
dadurch gekennzeichnet,
- daß der erste Antriebsmotor (14) mit einer auf einer feststehenden Leitspindel sitzenden und von diesem ersten Antriebsmotor (14) drehangetriebenen Schloßmutter (19), mittels welcher der Werkzeugschlitten (12) verschoben wird, verbunden ist,
- daß eine Welle (21), welche über ein drittes Getriebe (22,23,17,18) mit der Schloßmutter (19) verbunden ist, und welche mittels einer ersten Elektromagnet-Zahnkupplung (25) mit einem ersten Handrad (24) oder dergleichen verbindbar ist, vorgesehen ist,
- daß ein zweites Handrad (32) oder dergleichen mit der Gewindespindel (29) mittels einer zweiten Elektromagnet-Zahnkupplung (31) verbindbar ist, und
- daß der erste Antriebsmotor (14), das erste Getriebe (15,16,17,18), das erste Handrad (24), die erste Elektromagnet-Zahnkupplung (25), die Welle (21), das dritte Getriebe (22,23,17,18) sowie aie Schloßmutter (19) von einer Schloßplatte (13), die an dem entlang einem Gestell (11) verschieblich gelagerten Werkzeugschlitten (12) angeordnet ist, getragen werden.

2. CNC-Drehmaschine nach Anspruch 1,
**dadurch gekennzeichnet**, daß
das erste Getriebe (15, 16, 17, 18) und das dritte Getriebe (22, 23, 17, 18) gemeinsame Getriebeelemente aufweisen, nämlich ein auf einer Zwischenwelle (16) sitzendes Zahnrad (17) und eine Verzahnung (18) in der die Schloßmutter (19) tragenden Hülse.

3. CNC-Drehmaschine nach Anspruch 1 oder 2,
**gekennzeichnet durch**
Betriebsarten-Wählschalter, mittels welcher beim Einschalten der Elektromagnet-Zahnkupplungen (25, 31) zwecks Ankuppelns der Handräder (24, 32) an die Wellen bzw. Spindeln (21, 29) die motorischen Antriebe (14, 27) automatisch abgeschaltet werden.

4. CNC-Drehmaschine nach einem der vorhergehenden Ansprüche,
**gekennzeichnet durch**
einen auf dem Planschlitten (26) schwenk- und abnehmbar angeordneten Werkzeugschlitten (33).

5. CNC-Drehmaschine nach einem der vorhergehenden Ansprüche,
**dadurch gekennzeichnet**, daß
die Steuerungseinrichtung der Maschine mit einer Rückstell-Indexierungseinrichtung ausgestattet ist.

## Claims

1. A CNC lathe with
- a lathe spindle that is motor-driven at an adjustable speed of rotation,
- drive elements for moving the carriages and supports that carry the lathe tools,
- a CNC control device,
- a first drive motor (14) whose rotational speed is adjustable and which can be switched off, which ensures the advance of a tool carriage (12) by means of a first transmission system (15, 16, 17, 18), and
- a second drive motor (27) arranged on a cross slide (26) whose rotational speed is adjustable and which can be switched off, which is connected via a second transmission system (28) to a threaded spindle (29) mounted on the tool carriage (12) in the longitudinal direction of the cross slide (26), on which spindle there is seated a spindle nut (30) which is arranged secured against rotation on the cross slide (26),
**characterized in that**
- the first drive motor (14) is connected to a clasp nut (19) which is seated on a fixed leading spindle and is driven in rotation by this first drive motor (14), by means of which clasp nut the tool carriage (12) is displaced,
- that provision is made for a shaft (21) which is connected to the clasp nut (19) via a third transmission system (22, 23, 17, 18) and which shaft can be connected by means of a first electromagnetic toothed clutch (25) to a first hand wheel (24) or the like,
- that a second hand wheel (32) or the like can be connected to the threaded spindle (29) by means of a second electromagnetic toothed clutch (31), and
- that the first drive motor (14), the first transmission system (15, 16, 17, 18), the first hand wheel (24), the first electromagnetic toothed clutch (25), the shaft (21), the third transmission system (22, 23, 17, 18), as well as the clasp nut (19), are carried by an apron (13) which is arranged on the tool carriage (12) that is mounted for displacement along a support (11).

2. A CNC lathe according to claim 1,
**characterized in that**
the first transmission system (15, 16, 17, 18) and the third transmission system (22, 23, 17, 18) have common drive elements, that is to say, a gear wheel (17) disposed on an intermediate shaft (16) and a toothed system (18) in the sleeve which carries the clasp nut (19).

3. A CNC lathe according to claim 1 or 2,
**characterized by**
operating-mode selector switches, by means of which the motor drives (14, 27) are automatically switched off when the electromagnetic toothed clutches (25, 31) are switched on for the purpose of coupling the hand wheels (24, 32) to the shafts or spindles (21, 29).

4. A CNC lathe according to one of the preceding claims,
**characterized by**
a tool carriage (33) which is pivotably and removably arranged on the cross slide (26).

5. A CNC lathe according to one of the preceding claims,
characterized in that
the control device of the machine is provided with a resetting indexing device.

## Revendications

1. Tour CNC à conduite manuelle changeable
- avec un arbre actionné par un moteur, ayant un régime réglable,
- avec des éléments d'entraînement permettant le mouvement des chariots et des supports, qui soutiennent les outils de tournage,
- avec un dispositif de commande CNC
- avec un premier moteur d'entraînement (14), à régime réglable et qui peut être mis hors circuit, qui assure l'avancement d'un chariot porte-outils (12), à l'aide d'un premier engrenage (15,16,17,18), et
- avec un deuxième moteur d'entraînement (27), à régime réglable et qui peut être mis hors circuit également, disposé sur un chariot transversal (26); ce deuxième moteur est relié, par un deuxième engrenage (28), à une tige filetée (29), logée sur le chariot porte-outils (12) dans le sens longitudinal du chariot transversal (26). Sur cette tige est inséré un écrou à broche (30) résistant à la torsion, disposé sur le chariot transversal (26),
caractérisé par le fait
- que le premier moteur d'entraînement (14) est relié à un écrou embrayable (19), logé sur une vis-mère fixe, et actionné par ce premier moteur d'entraînement (14); cet écrou embrayable permet de déplacer le chariot porte-outils (12);
- qu'un arbre (21) est prévu. Il est relié par un troisième engrenage (22,23,17,18) à l'écrou embrayable (19), et peut être relié, à l'aide d'un premier accouplement à dents électromagnétique (25), à une première roue à main (24) ou à un autre organe similaire;
- qu'une deuxième roue à main (32), ou un autre organe similaire, peut être reliée à la tige filetée (29) à l'aide d'un deuxième accouplement à dents électromagnétique (31) et
- que le premier moteur d'entraînement (14), le premier engrenage (15,16,17,18), la première roue à main (24), le premier accouplement à dents électromagnétique (25), l'arbre (21), le troisième engrenage (22,23,17,18), ainsi que l'écrou embrayable (19) sont supportés par un tablier de chariot (13), qui est disposé sur le chariot porte-outils (12), translatable le long d'un châssis (11).

2. Tour CNC à conduite manuelle changeable conforme à la revendication 1, caractérisé par le fait que le premier engrenage (15,16,17,18) et le troisième engrenage (22,23,17,18) présentent des éléments communs, notamment une roue dentée logée sur un arbre intermédiaire (16), et une douille portant une denture (18) dans l'écrou embrayable (19).

3. Tour CNC à conduite manuelle changeable conforme aux revendications 1 ou 2, caractérisé par le commutateur sélectif du mode de fonctionnement, qui permet de couper automatiquement les moteurs (14,27), lors de la mise en circuit des accouplements à dents électromagnétiques (25,31) destinés à accoupler les roues à main (24,32) aux arbres ou aux tiges (21,29).

4. Tour CNC à conduite manuelle changeable conforme à l'une des revendications précédentes, caractérisé par un chariot porte-outils (33), orientable et amovible, disposé sur le chariot transversal (26).

5. Tour CNC à conduite manuelle changeable conforme à l'une des revendications précédentes, caractérisé par le fait que l'organe de commande de la machine est équipé d'un dispositif d'indexation de rappel.
